Europäisches Patentamt

European Patent Office

Office européen des brevets

(11) Publication number: **0 187 742**
**B1**

(12) **EUROPEAN PATENT SPECIFICATION**

(45) Date of publication of patent specification: **10.05.89**

(21) Application number: **84902766.9**

(22) Date of filing: **16.07.84**

(86) International application number:
**PCT/US84/01107**

(87) International publication number:
**WO 86/00584 30.01.86 Gazette 86/03**

(51) Int. Cl.⁴: **B 60 R 9/04**

(54) **VEHICLE ARTICLE CARRIER.**

(43) Date of publication of application:
**23.07.86 Bulletin 86/30**

(45) Publication of the grant of the patent:
**10.05.89 Bulletin 89/19**

(84) Designated Contracting States:
**DE FR GB SE**

(56) References cited:
**US-A-4 015 760**
**US-A-4 099 658**
**US-A-4 132 335**
**US-A-4 222 508**
**US-A-4 239 139**
**US-A-4 264 025**
**US-A-4 274 568**
**US-A-4 295 587**
**US-A-4 358 037**
**US-A-4 364 500**

(73) Proprietor: **BOTT, John, A.**
**931 Lakeshore Drive**
**Grosse Pointe, MI 48236 (US)**

(72) Inventor: **BOTT, John, A.**
**931 Lakeshore Drive**
**Grosse Pointe, MI 48236 (US)**

(74) Representative: **Finck, Dieter et al**
**Patentanwälte v. Füner, Ebbinghaus, Finck**
**Mariahilfplatz 2 & 3**
**D-8000 München 90 (DE)**

Courier Press, Leamington Spa, England.

## Description

The invention relates to an article carrier system for supporting and securing articles to an exterior surface of a vehicle as described in the precharacterizing part of attached claim 1. Such an article carrier system is known from US—A—4 274 568.

The known luggage carrier is provided for use with specially configured luggage cases removably attached to the carrier. In particular, the abutments of the carrier are configured to interlock with projections extending from the underside of the case. Additionally, the abutments are adjustable so that cases of different sizes may be accomodated.

The object of the present invention is to provide an article carrier system with slidably adjustable and fixedly engageable abutments and/or tie downs for boxes, luggage, and the like.

According to the present invention, this object is achieved by the features mentioned in claim 1.

The abutments of the present invention are not only slidable, adjustable and fixedly engageable in place, but also are stored within the slats of the carrier substantially out of view when not in use. A significant advantage of the article carrier system of the present invention is therefore that the article carrier has a low profile when not in use with nothing substantially above the plane of the vehicle surface to which the carrier is attached, thereby minimizing any adverse wind noise or fuel economy effects that would exist with any portion of the carrier being substantially vertically elevated.

Preferred embodiments of the carrier system according to the present invention are described in subclaims 2 to 5.

According to claim 2, each abutment may include at least one tie down member for optimum securement of articles or luggage to the article carrier and thereby the vehicle. According to claims 4 and 5, the abutments includes a means for facilitating vertical disposition of the abutment prior to selecting a position and fixedly engaging the abutment in that selected position.

Preferred embodiments of the article carrier according to the invention are now explained by way of example and with regard to the drawings.

Figure 1 is an elevated perspective view of a luggage carrier of the present invention;

Figure 2 is an enlarged elevated perspective view of a corner of the luggage carrier of Figure 1;

Figure 3 is an exploded perspective view of a portion of the luggage carrier of Figure 2;

Figure 4 is a vertical sectional view along the line 4—4 of Figure 2 with the tie down and/or positioning member disposed in a stored position;

Figure 5 is a vertical sectional view along the line 5—5 of Figure 4;

Figure 6 is an elevated plan view of the device illustrated in Figures 4 and 5, having a portion of the slat broken away;

Figure 7 is a view similar to Figure 5 of an alternative embodiment of the present invention;

Figure 8 is an elevated plan view similar to Figure 6 of still another alternative embodiment of the present invention;

Figure 9 is a vertical sectional view of the embodiment illustrated in Figure 8 taken along the line 9—9 of Figure 8;

Figure 10 is an elevated perspective view of an alternative embodiment of the luggage carrier of Figure 1;

Figure 11 is an enlarged elevated perspective view of a corner of the luggage carrier of Figure 10;

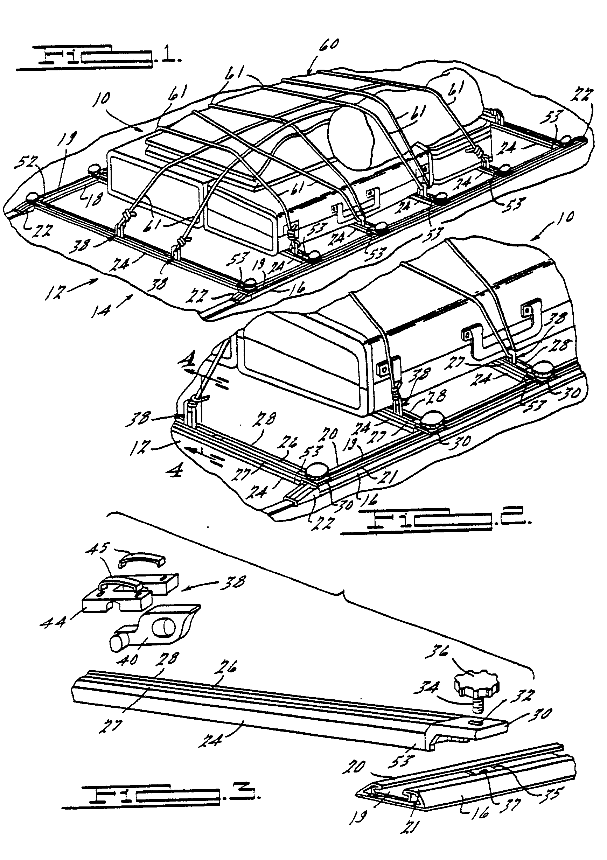

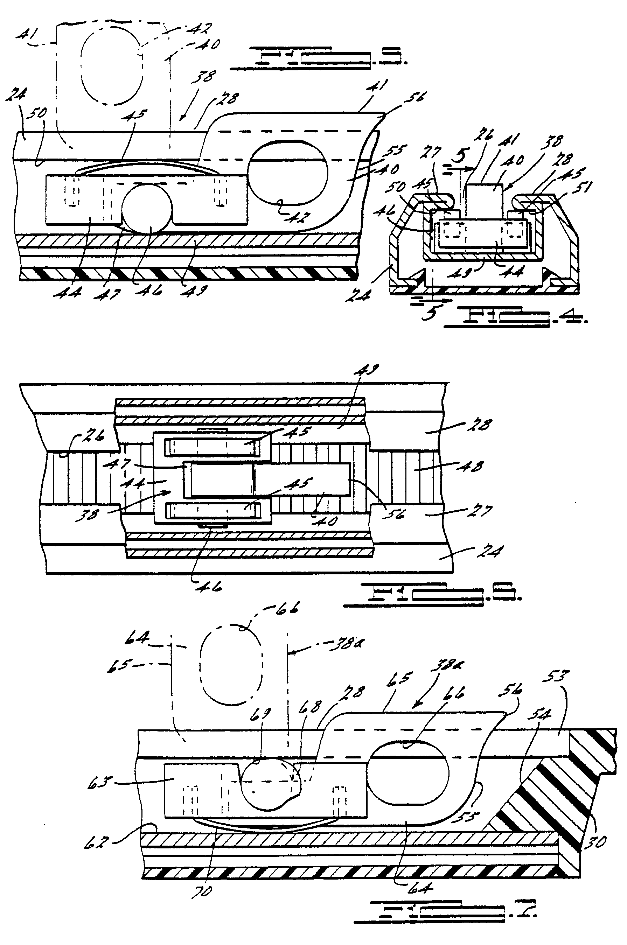

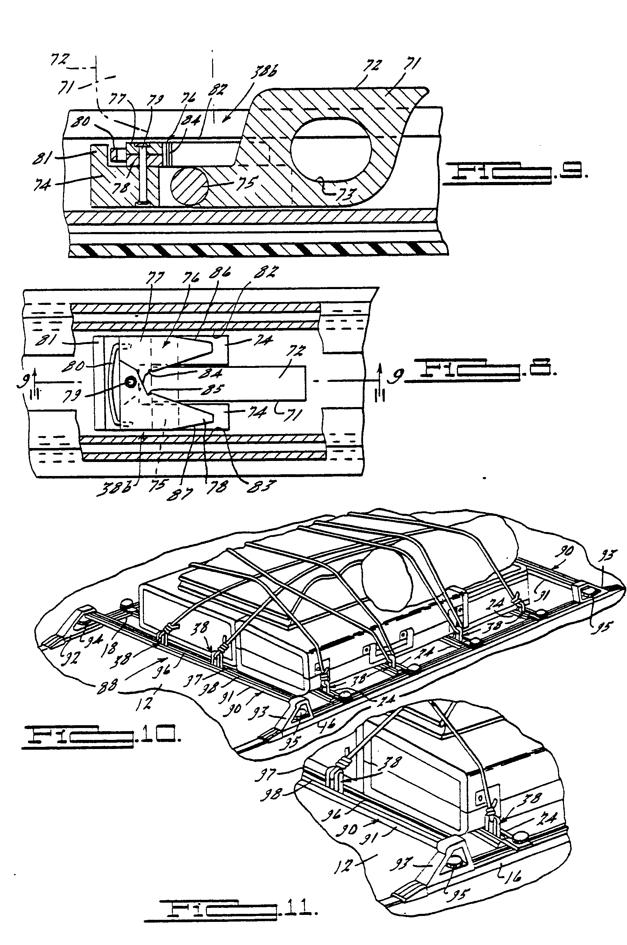

Referring now in detail to the drawings and in particular to Figures 1—5 thereof, a vehicle luggage carrier 10 is shown in operative association with a generally horizontally disposed roof portion 12 of a typical automotive vehicle 14. Generally speaking, the luggage carrier 10 comprises a pair of laterally spaced, longitudinally extending slats 16 and 18 which are secured upon the roof portion 12 at positions adjacent the lateral sides or edges thereof. Preferably, the slats 16, 18 are of uniform cross sectional shape along the entire length thereof. Channels 19 are defined within the slats 16, 18 and are co-extensive of the length of the slats 16, 18. The slats 16, 18 are fixedly secured to the vehicle roof portion 12 by means of suitable longitudinally spaced fastening elements (not shown) which extend downwardly through suitable openings in the base of the slats 16, 18 and are secured to suitable fastening elements mounted within the roof portion 12. Preferably, a suitable resilient or elastomeric pad is provided interjacent the underside of the slats 16, 18 and the confronting portion of the vehicle roof 12. The slats 16, 18 each include upper article supporting surfaces 20 and 21 extending longitudinally on the slats 16, 18. Additionally, the opposite ends of each of the slats 16, 18 are provided with suitable end caps 22 which may be secured in place by the same fastening elements which secure the slats 16, 18 to the roof portion 12.

The luggage rack 10 in many general respects is similar to the luggage racks described in US—A—4 099 658 and US—A—4 239 139. The luggage carrier 10 further comprises a plurality of transversely or laterally extending cross members or cross slats, generally designated with the numeral 24, which also include a longitudinally extending channel 26 having upper article support surfaces 27 and 28 associated on both sides of the channel 26 and clamping means associated within the interior of the channel 26. Each of the cross slats 24 is provided with an end fitting 30 which is provided with a suitable aperture 32 through which a suitable threaded stud 34 may extend for threadable engagement with a clamping element 35 of the associated slat 16 or 18. The vertically upper portion of the threaded stud 34 comprises a manually engageable portion 36. Thus, the cross slats 24 are slidable longitudinally along the slats 16, 18 to be positioned operably at any location along the length of the slats 16, 18. Cross members 24 are also readily removable by removal of the threaded studs 34 from the threaded apertures 37 of the clamping element 35 of the slats 16, 18.

Within each of the cross members 24 are disposed slidable tie down/positioning members 38. Although only illustrated in association with the cross members 24, the tie down/positioning members 38 are also readily capable of similar association with the channel 19 of one of the slats 16, 18. Referring more particularly to Figures 4 to 6, tie down/positioning members 38 include an upper section 40 having a vertically disposable abutment surface 41 and an aperture 42 therein, a base portion 44 including spring biasing members 45, and a pivot 46 for pivotably associating the upper section 40 with the base portion 44. Upper section 40 also includes a lower cam member 47 on the opposite side of the pivot 46 which can be operably associated with optional serrations 48 in the base 49 of the interior of the channel 26 of the cross member 24. Clamping means fixedly engages the tie down member 38 in a selected position, principally comprising the lower cam member 47, the biasing members 45, and all of the other components of the members 38 operably associating the cam member 47 and biasing members 45, so that pivotal movement of the upper section 40 from the horizontal to the vertical position clamps the biasing members 45 against the clamping surfaces 50, 51 of the slat or cross member.

When not in use, the tie down/positioning members 38 are pivotally disposed to a horizontal position to be stored within the interior of the channel 26 of the cross slat 24. Means for facilitating vertical disposition of the members 38 (Figure 7) is disposed at the ends 52, 53 of the cross members 24, where a canted or ramp portion 54 is integrated with the end fitting 30 of the cross member 24. The member 38 has an operably associable canted upper portion 55 which may be associated with the canted end member portion 54 so, as the member 38 is slid towards the end portion 30, the canted portions interact to raise the end 56 of the member 38 above the upper surfaces 27, 28 of the cross member 24 and permit the operator to slidably select the position at which the member 38 is to be located and subsequently vertically dispose the members 38 to fixedly engage the member 38 in the selected position.

As illustrated in Figure 1, the vertically disposed tie down/positioning members 38 are also utilizable as positioning abutments for luggage 60 situated on the luggage carrier 10 against abutment surfaces 41. With the apertures 42 disposed adjacent the luggage 60, the members 38 may also be disposed at the optimum location for both positioning and tie down points. Ropes 61, spider connectors with hooked end portions, elastic ropes with hooked end portions, and the like may be utilized with the tie down function of the members 38 to attach and secure various different types of articles and luggage to be carried on the luggage carrier 10 as illustrated in Figure 1. Furthermore, clamping means may be disposed adjcent the tie down/positioning members 38 within the slats 16, 18 and cross members 24 to operably associate any of a number of optional accessories, such as bike racks, ski racks, utility boxes, and the like as desired. Thus, the tie down/ positioning member 38 provide at least two additional notable features to the luggage carrier 10 with the option of not diminishing any of the other features provided for with the base luggage carrier 10.

Alternative embodiments of tie down/positioning members 38 are illustrated in Figures 7—9. Figure 7 illustrates a tie down/positioning member 38a where the member 38a clamps principally along clamping surfaces 62 at the bottom of the slat 16 or 18 or cross member 24. The member 38a has a C-shaped base portion 63 in which an upper section 64, having a vertically disposable abutment surface 65 and an aperture 66 therein, is pivotally disposed on pivot 67. The upper section 64 includes a cam 68 adjacent the pivot 67 thereof. When the upper section 64 is pivoted to a vertically disposed position, the cam 68 is moved against clamping surfaces 69 of the channel of the slat or cross member. Clamping surfaces 69 may have notches or serrations thereon. The base portion 63 has a pair of spring biasing members 70 on the underside thereof which are clampingly engaged with the base clamping surface 62 when the cam 68 is engaged with the clamping surfaces 69, to fixedly but removably locate the member 38a as a tie down and/or an abutment along the length of an elongated slat or cross member.

Figures 8 and 9 illustrate an embodiment wherein the clamping engagement of the tie down/positioning member 38b with the slat 16 or 18 or cross member 24 is laterally within the channel of the slat or cross member. The member 38b comprises an upper section 71 having a vertically disposable abutment surface 72 and an aperture 73 therein, a C-shaped base portion 74, and a pivot 75 for pivotally associating the upper section 71 with the base portion 74. A scissors clamping member 76, having first 77 and second 78 clamping elements, is fixedly engaged to the base portion 74 by rivet 79 about which elements 77 and 78 pivot. Elements 77 and 78 are biased to close by spring 80 as positioned by abutment 81 of base portion 74. As the upper section 71 is moved from its horizontally disposed to its vertically disposed position, elements 77 and 78 are forced outwardly to clampingly engage longitudinally extending clamping surfaces 82 and 83 along the sidewalls of the channel of the slat or cross member. When the vertically disposed position of the upper section 71 is attained, the upper section 71 will engage two notches 84 and 85 in elements 77 and 78, respectively, to secure the upper section 71 in the aforementioned vertical abutment and/or tie down position and clampingly engaged to the slat or cross member. Movement of the upper section from a vertical to a horizontal position releases the clamping engagement of the clamping surfaces 86, 87 of elements 77 and 78 and surfaces 82, 83 to permit slideably adjustable movement of the tie down/positioning member 38b.

Referring to Figures 10 and 11, the article carrier 88 illustrated demonstrates that the present invention may also include vertically elevated cross rail members 90 comprising a cross rail 91 mounted between two stanchion elements 92 and 93. The stanchion elements 92, 93 each have an aperture through which is disposed a manually engageable threaded stud 94 or 95, respectively, each of which studs is operably associated with clamping means within the slats 16, 18. The elevated cross rail 91 is preferably of an aerodynamic cross section and includes a longitudinally extending channel 96 including clamping means in the interior thereof and upper support surfaces 97, 98 extending on both sides thereof. Tie down/ positioning members 38, 38a, or 38b may be operably associated with the interior portion of channel 96 as described above. The article carrier 88 of Figures 10 and 11 also may include a plurality of cross members 24 as described above with respect to the luggage carrier of Figure 1 secured between the slats 16, 18 in an identical manner.

## Claims

1. An article carrier system (10) for supporting and securing articles on a generally horizontally extending exterior body surface (12) of an automobile (14), comprising a pair of elongated slats (16, 18) on said surface extending in positions substantially parallel to one another, means permanently securing said slats to said body in said positions, said slats being substantially rectangular in vertical cross-section with a width substantially greater than the height of the section, the tops (20, 21) of said slats being substantially flat and parallel to said horizontal surface (12) and providing means on which articles may be rested and supported above said surface, at least one elongated cross-member (24; 90) extending transversely of said elongated slats and having end portions (30; 92, 93) slidable along the length of the respective slats (16, 18) and removably mounted on said slats, at least said cross-member including a longitudinal extending channel (26; 96) having clamping surfaces (50, 51; 62) within the interior of said channel, and abutment means (38; 38a; 38b) for positioning articles on said article carrier system slidably and adjustably disposed on said cross member and/or slats and including means (47, 45; 68, 70; 77, 78, 81) for clampingly engaging said abutment means in selected positions along the length of said cross-member or slat, characterized in that said abutment means (38; 38a; 38b) comprises a base portion (44; 63; 74) disposed within said channel, and a vertically disposable abutment member (40; 64; 71) pivotally attached to said base portion to pivot between a vertically disposed abutment position and a horizontally disposed storage position with at least a portion of said abutment member in said storage position disposed within said channel (26).

2. An article carrier system in accordance with claim 1, characterized in that said abutment member (40; 64; 71) includes means (42; 66; 73) for tying down articles disposed on said article carrier system.

3. An article carrier system in accordance with claim 1, characterized in that said means (47, 45) for clampingly engaging comprises means (45) for biasing said base portion (44) of said abutment means away from said clamping surfaces (50, 51) of said channel (26) and means (46, 47) operable in response to the placement of said abutment member (40) in said vertically disposed position for clampingly engaging said biasing means against said clamping surfaces to clampingly engage said abutment means (38; 38a) to said cross-member (24; 90) or slat (16; 18).

4. An article carrier system in accordance with claim 1, characterized in that the system comprises means (54, 55) for facilitating disposition of said abutment member (40; 64; 71) from said horizontal position to said vertical position in response to sliding movement of said abutment member to one end of said cross-member (24; 90) or slat (16; 18), respectively.

5. An article carrier system in accordance with claim 4, characterized in that said facilitating means comprises a ramp portion (54) disposed within said channel of said cross-member (24; 90) and said slat (16; 18), respectively, and that the abutment member (40; 64; 71) has an operably associable canted portion (55).

## Patentansprüche

1. Gegenstandsträgersystem (10) zum Tragen und Festlegen von Gegenständen an einer sich insgesamt horizontal erstreckenden Karosserieoberfläche (12) eines Automobils (14) mit einem Paar von langestreckten Leisten (16, 18) auf der Oberfläche, die sich in Positionen erstrecken, die im wesentlichen parallel zueinander sind, mit Einrichtungen zum permanenten Festlegen der Leisten an der Karosserie in den genannten Positionen, wobei die Leisten im vertikalen Querschnitt im wesentlichen rechteckig sind und eine Breite haben, die wesentliche größer ist, als die Höhe dieses Querschnitts, die Oberseiten (20, 21) der Leisten im wesentlichen eben und parallel zu der horizontalen Oberfläche (12) sind und Einrichtungen bilden, auf denen Gegenstände über der Oberfläche abgelegt und abgestützt werden können, mit wenigstens einem länglichen Querteil (24; 90) des sich quer zu den langestreckten Leisten erstreckt und Endabschnitte (30; 92, 93) hat, die über der Länge der jeweiligen Leisten (16, 18) gleitend verschiebbar und an den Leisten entfernbar angebracht sind, wobei wenigstens das Querteil einen sich in Längsrichtung erstreckenden Kanal (26; 96) mit Klemmfläche (50, 51; 62) in seinem Inneren und Widerlagereinrichtungen (38; 38a; 38b) zum Positionieren der Gegenstände auf dem Gegenstandsträgersystem aufweist, die an dem Querteil und/oder den Leisten gleitend verschiebbar und einstellbar angeordnet sind und Einrichtungen (47, 45; 68, 70; 77, 78, 81) für den Klemmeingriff der Widerlagereinrichtungen in ausgewählten Positionen über der Länge des Querteils oder der Leiste haben, dadurch gekennzeichnet, daß die Widerlagereinrichtungen (38; 38a; 38b) einen in dem Kanal angeordneten Basisabschnitt (44; 63; 74) und ein vertikal positionierbares Stützelement (40; 64; 71) aufweisen, das schwenkbar an dem Basisabschnitt für ein Verschwenken zwischen einer vertikal angeordneten Stützposition und einer horizontal angeordneten Lagerposition festgelegt ist, wobei wenigstens ein Abschnitt des Stützelements in der Speicherposition in dem Kanal (26) angeordnet ist.

2. Gegenstandsträgersystem nach Anspruch 1, dadurch gekennzeichnet, daß das Stützelement (40; 64; 71) Einrichtungen (42; 66; 73) zum Festlegen von Gegenständen aufweist, die auf dem Gegenstandsträger angeordnet sind.

3. Gegenstandsträgersystem nach Anspruch 1, dadurch gekennzeichnet, daß die Einrichtungen (47, 45) für den Klemmeingriff Einrichtungen (45) zum Vorspannen des Basisabschnitts (44) der Widerlagereinrichtung weg von den Klemmflächen (50, 51) des Kanals (26) und Einrichtungen (46, 47) aufweist, die ansprechend auf die Plazierung des Stützelements (40) in der vertikal angeordneten Position betätigbar sind, um die Vorspanneinrichtungen klemmend in Eingriff an den Klemmflächen zu bringen um dadurch die Widerlagereinrichtungen (38; 38a) klemmend an dem Querteil (24; 90) oder der Leiste (16; 18) eingreifen zu lassen.

4. Gegenständsträgersystem nach Anspruch 1, dadurch gekennzeichnet, daß das Systems Einrichtungen (54, 55) zum Erleichtern der Positionierung des Stützelements (40; 64; 71) aus der horizontalen Position in die vertikale Position ansprechend auf eine Gleitverschiebungsbewegung des Stützelements zu einem Ende des Querteils (24; 90) bzw. der Leiste (16; 18) hin aufweist.

5. Gegenstandsträgersystem nach Anspruch 4, dadurch gekennzeichnet, daß die Erleichterung bringenden Einrichtungen einen Rampenabschnitt (54) aufweisen, der in den Kanal des Querteils (24; 90) bzw. der Leiste (16; 18) angeordnet ist, und daß das Stützelement (40; 64; 71) einen abgeschrägten Abschnitt (55) aufweist, der im Betrieb zugeordnet werden kann.

## Revendications

1. Porte-bagages (10) destiné à porter et fixer des objets sur une surface extérieure s'étendant de façon sensiblement horizontale (12) de la carrosserie d'une automobile (14), comprenant une paire de longerons allongés (16, 18) situés sur cette surface et s'étendant dans des positions sensiblement parallèles l'une à l'autre, des moyens fixant ces longerons, de manière permanente et dans ces positions, sur la carrosserie, ces longerons possédant une section transversale verticale sensiblement rectangulaire dont la largeur est sensiblement supérieure à la hauteur de cette section, les faces supérieures (20, 21) de ces longerons étant sensiblement planes et parallèles à la surface horizontale (12) de la carrosserie et constituant des moyens sur lesquels des objets peuvent reposer et être portés au-dessus de cette surface, au moins une traverse allongée (24; 90) s'étendant transversalement aux longerons allongés et comportant des parties extrêmes (30; 92, 93) qui peuvent coulisser sur la longueur des longerons respectifs (16, 18) et sont montées de manière amovible sur ces longerons, au moins cette traverse comportant un couloir (26; 96) s'étendant longitudinalement et possédant des surfaces de serrage (50, 51; 62) situées à l'intérieur de ce couloir, et des moyens de butée (38; 38a; 38b) qui permettent de positionner des objets sur le porte-bagages, sont placés de manière coulissante et réglable sur la traverse et/ou les longerons et comprennent des moyens (47, 45; 68, 70; 77, 78, 81) permettant d'immobiliser, par serrage, ces moyens de butée dans des positions choisies sur la longueur de la traverse ou du longeron, caractérisé en ce que les moyens de butée (38; 38a; 38b) comprennent une partie de base (44; 63; 74) placée à l'intérieur du couloir et une pièce de butée orientable verticalement (40; 64; 71) qui est montée de façon pivotante sur la partie de base de façon à pivoter entre une position de butée orientée verticalement et une position de rangement orientée horizontalement, au moins une partie de cette pièce de butée étant, dans cette position de rangement, située à l'intérieur du couloir (26).

2. Porte-bagages suivant la revendication 1, caractérisé en ce que la pièce de butée (40; 64; 71) comporte un moyen (42; 66; 73) permettant de serrer, par traction vers le bas, des objets placés sur le porte-bagages.

3. Porte-bagages suivant la revendication 1, caractérisé en ce que les moyens d'immobilisation par serrage (47, 45) comprennent des moyens (45) permettant de repousser élastiquement la partie de base (44) des moyens de butée par rapport aux surfaces de serrage (50, 51) du couloir (26) et des moyens (46, 47) servant, sous l'effet de la mise en place de la pièce de butée (40) dans la position à orientation verticale, à immobiliser, par serrage sur ces surfaces de serrage, les moyens repoussant la partie de base, de façon à immobiliser, par serage, les moyens de butée (38; 38a) sur la traverse (24; 90) ou le longeron (16; 18).

4. Porte-bagages suivant la revendication 1, caractérisé en ce qu'il comprend des moyens (54, 55) destinés à faciliter la mise en place de la pièce de butée (40; 64; 71) de la position horizontale à la position verticale sous l'effet d'un déplacement coulissant de cette pièce de butée vers une extrémité soit de la traverse (24; 90), soit du longeron (16; 18) respectivement.

5. Porte-bagages suivant la revendication 4, caractérisé en ce que les moyens facilitant la mise en place comprenant une partie formant rampe (54) située à l'intérieur du couloir soit de la traverse (24; 90), soit du longeron (16; 18) et en ce que la pièce de butée (40; 64; 71) comporte une partie inclinée de coopération fonctionnelle (55).

FIG.1.

FIG.2.

FIG.3.

FIG.9.

FIG.8.

FIG.10.

FIG.11.